# FASCICULE DE BREVET EUROPEEN

(11) **EP 2 619 714 B1**
(45) Date de publication et mention de la délivrance du brevet: **12.08.2015**
(21) Numéro de dépôt: 10763166.5
(22) Date de dépôt: 24.09.2010
(51) Int. Cl.: G06K 19/06

(54) **MOTIF D'IDENTIFICATION BIDIMENSIONNEL, ARTICLE COMPRENANT UN TEL MOTIF ET PROCEDES DE MARQUAGE ET D'IDENTIFICATION D'UN TEL MOTIF**
ZWEIDIMENSIONALES IDENTIFIKATIONSMUSTER, ARTIKEL MIT EINEM SOLCHEN MUSTER SOWIE VERFAHREN ZUR MARKIERUNG UND IDENTIFIKATION EINES SOLCHEN MUSTERS
TWO-DIMENSIONAL IDENTIFICATION PATTERN, ARTICLE INCLUDING SUCH A PATTERN, AND METHODS FOR MARKING AND IDENTIFYING SUCH A PATTERN

(43) Date de publication de la demande: 31.07.2013
(73) Titulaire: SICPA HOLDING SA, 1008 Prilly (CH)
(72) Inventeur: DECOUX, Eric, CH-1800 Vevey (CH); VUISTINER, Dave, CH-1010 Lausanne (CH)
(74) Mandataire: Casalonga, Axel
(86) Numéro de dépôt international: PCT/EP2010/064187
(87) Numéro de publication internationale: WO 2012/037985

(56) Documents cités:
- FR-A1- 2 882 173
- US-A1- 2007 158 420
- US-A1- 2009 323 124

## Description

L'invention concerne des motifs d'identification bidimensionnels, en particulier des motifs utilisés pour l'identification d'articles.

L'invention concerne également les articles comprenant de tels motifs, ainsi que des procédés de marquage et d'identification de ces motifs sur de tels articles.

Actuellement, on identifie des articles par une marque ou un logo inscrit sur un emballage de l'article ou sur l'article lui-même. Ces inscriptions, sont visibles et permettent l'identification de l'article par tous les utilisateurs.

On peut également utiliser d'autres identifiants visibles qui contiennent des informations chiffrées pour que le contenu de l'identifiant ne soit pas reconnu par tous les utilisateurs.

On peut citer, par exemple, des identifiants à une dimension du type code barres ou à deux dimensions du type matrice de données ou « data matrix » qui sont les plus utilisés.

Les codes barres représentent des informations à l'aide d'un motif constitué de barres de différentes épaisseurs et d'espaces. Mais ces motifs sont facilement déchiffrables.

Par ailleurs, les identifiants du type « data matrix » utilisent des pixels blancs et noirs formant un symbole et qui sont agencés au sein d'un motif ayant une forme rectangulaire ou quadratique. Le motif d'une telle matrice de données ou « data matrix » est composé de deux bordures pleines adjacentes en forme de « L », dont l'ensemble est appelé « pattern de repérage », et de deux bordures formées de pixels blancs et noirs en alterné, appelées « bordures de référence ». Le motif de repérage est utilisé pour localiser et orienter le symbole et les bordures de références permettent de compter le nombre de colonnes et de lignes dans le symbole. En outre, le « data matrix » utilise encore une zone de détection, parfois appelée « quiet zone », pour détecter le motif de repérage. Cette zone de détection est utilisée pour isoler nettement le motif de repérage de tout autre élément de l'article avec lequel il pourrait être confondu.

Mais ces identifiants, visibles par l'utilisateur, de par notamment leur motif de repérage et leur zone de détection, doivent être marqués en un endroit choisi sur l'article afin de ne pas dénaturer son aspect général. Par ailleurs, le motif de repérage est un motif connu et constant quel que soit l'article à identifier. Ce motif de repérage ne contient pas d'information et sert uniquement à la détection du symbole.

En outre, ces matrices de données ou « data matrix », pourtant pourvus de mécanismes de correction d'erreurs, ne sont pas suffisamment robustes car ils dépendent du substrat sur lequel ils sont déposés. En effet, en fonction des aspérités du substrat, ce dernier peut dégrader le motif lors de son marquage sur l'article. La robustesse d'un tel motif dépend également de la qualité d'impression, car un défaut d'impression, par exemple une encre qui s'étale ou une absence d'impression d'un pixel du symbole, peut altérer fortement le motif. Dans certains cas, un motif sous forme de matrice de données ou « data matrix » de dimension 16 pixels par 16 pixels peut ainsi être rendu illisible par la destruction de plus de six pixels.

La demande de brevet FR 2 882 173 décrit un procédé de codage d'informations utilisant des dots bidimensionnels faisant partie d'un alphabet. Les différents caractères de cet alphabet sont représentés par des colonnes au nombre d'au moins deux.

Il est proposé selon la présente invention, un motif d'identification bidimensionnel qui améliore la robustesse de l'identification d'articles classiques.

Il est également proposé un motif d'identification qui soit invisible pour l'utilisateur tout en étant détectable par un système de détection adapté.

Il est aussi proposé un article comprenant un tel motif d'identification, et des procédés de marquage et d'identification du motif d'identification.

Selon un aspect de l'invention, il est proposé un motif d' identification bidimensionnel selon la revendication 1.

Ainsi, on fournit un motif d'identification particulièrement robuste car comprenant plusieurs symboles et offrant un nombre élevé de possibilités d'organisation pour un motif de référence, dit également par la suite « pattern », déterminé. On entend par motif de référence, un arrangement de symboles, et par motif d'identification, une représentation possible parmi toutes les représentations des symboles du motif de référence ou pattern.

En outre, chaque symbole du motif de référence ou pattern peut avoir plusieurs représentations possibles, ce qui augmente le nombre de combinaisons de représentations d'un même motif de référence ou pattern. En effet, un pattern ayant un agencement de symboles déterminé peut avoir plusieurs représentations possibles correspondant aux états valides possibles de chaque symbole.

Ainsi, le pattern est rendu illisible pour un utilisateur qui ne connaît pas préalablement l'alphabet utilisé pour élaborer le pattern, c'est-à-dire qui ne connaît pas les états valides et invalides des symboles. Quand bien même un utilisateur pourrait détecter les états inscrits sur un article, ne connaissant pas l'alphabet il lui est très difficile, voire quasi impossible, de déterminer les symboles à partir d'une reconstitution de toutes les combinaisons d'états valides et invalides pour retrouver l'alphabet des symboles. Le fait de ne pas pouvoir déterminer les symboles inscrits sur l'article, rend impossible de retrouver le pattern. Le ou les états invalides des symboles rendent en particulier la lecture pratiquement impossible sans la connaissance de l'alphabet.

En particulier, si le pattern comprend des symboles différents le nombre de combinaisons augmente et rend sa reconnaissance encore plus difficile.

En outre le motif d'identification ne nécessite pas l'utilisation d'un repère particulier lors de son identification ultérieure. Par rapport à un motif sous forme d'une matrice de données du type « data matrix », le motif d'identification selon l'invention n'a pas besoin d'une zone de détection spécifique pour le repérage du pattern.

Selon un mode de réalisation, chaque état valide comprend au moins deux éléments ayant une première représentation possible et une deuxième représentation possible distincte de la première représentation.

Selon un mode de réalisation avantageux, chaque état des symboles de l'alphabet comprend un groupe d'éléments. Chacun desdits groupes d'éléments comprend au moins deux éléments. Chaque élément comporte une représentation possible parmi un ensemble de représentations comprenant une première représentation et une deuxième représentation distincte de la première représentation.

En outre, chaque symbole comprend un premier état valide comprenant un premier groupe d'au moins un élément représenté selon la première représentation et d'au moins un élément représenté selon la deuxième représentation, et un deuxième état valide comprenant un deuxième groupe d'au moins un élément représenté selon la deuxième représentation et d'au moins un élément représenté selon la première représentation.

Ainsi, on fournit un motif d'identification dont les symboles ont deux états valides complémentaires puisque le premier élément d'un groupe pour un état valide est différent du premier élément du groupe correspondant à l'autre état valide. De même, le deuxième élément d'un groupe est différent du deuxième élément de l'autre groupe, chaque groupe correspondant à un état valide. On fournit alors des états valides qui ont des représentations agencées différemment. Lorsqu'on utilise, par exemple, la même surface d'encre pour représenter ces états valides complémentaires sur l'article, on rend le motif d'identification homogène à une échelle macroscopique, ce qui le rend plus difficile à détecter. En effet, si chaque élément est réalisé par exemple par un point ou une tache d'encre de surface déterminée, le fait que les états valides comportent tous le même nombre de points ou tâches d'encre permet d'obtenir la même surface d'encre et donc la même densité surfacique d'encre pour tous les états valides et donc également pour le motif d'identification constitué par l'agencement des différents symboles dans l'un ou l'autre de leur état valide.

Selon un autre mode de réalisation, chacun desdits groupes d'éléments comprend plus de deux éléments. Chaque symbole comprend un premier état valide comprenant un premier groupe de plusieurs éléments représentés selon une première représentation et de plusieurs éléments représentés selon une deuxième représentation. Chaque symbole comprend également un deuxième état valide comprenant un deuxième groupe de plusieurs éléments représentés selon la deuxième représentation et de plusieurs éléments représentés selon la première représentation. Le nombre d'éléments dans chaque groupe peut être par exemple de quatre, sans que ce nombre soit limitatif.

Ainsi on fournit un motif d'identification comprenant des symboles complexes, ce qui augmente la difficulté pour reconnaître le pattern lors d'une tentative d'identification ultérieure non autorisée.

Les groupes d'éléments précités peuvent comprendre de préférence un même nombre d'éléments, ce qui améliore l'homogénéité du motif d'identification pour le rendre encore plus difficile à détecter lorsque lesdits éléments sont réalisés par un point ou une tache d'encre de surface déterminée.

Selon un mode de réalisation préféré, au moins un état valide d'au moins un symbole dudit motif d'identification représente une information numérique. Ainsi on peut procéder au chiffrement d'une information numérique à l'aide des états valides des symboles du motif d'identification.

L'invention fournit ainsi un moyen de chiffrement très robuste car il faut d'abord reconnaître le motif d'identification, puis identifier son contenu, avant d'accéder à l'information qu'il contient.

Les états valides de chaque symbole du pattern peuvent représenter respectivement des valeurs binaires d'une information numérique. Le pattern est donc particulièrement adapté pour chiffrer des informations binaires.

Selon un autre aspect de l'invention, il est proposé un article comprenant au moins un motif d'identification défini ci avant.

Cet article peut être tout type de support pour le motif d'identification, tel qu'une boîte, une feuille, par exemple en aluminium, une capsule ou une cartouche pouvant par exemple contenir une matière comestible comme du café ou une infusion, un bouchon de bouteille, un billet de banque, un passeport, un document de sécurité, une étiquette, une carte, un bon commercial, une pilule pharmaceutique, une montre, tout support ayant une surface métallique ou en céramique, un emballage, un semi-conducteur, des périphériques pour ordinateurs (souris, claviers....), etc.

Selon un mode de réalisation, au moins un motif d'identification est présent sur l'article, par exemple sur une couche dudit article.

L'article peut comprendre plusieurs motifs d'identification correspondant à une ou des représentations d'un même motif de référence ou pattern.

Grâce à la répétition du motif d'identification, on améliore la robustesse vis-à-vis de son identification ultérieure. Cette répétition empêche toute dégradation de la détection du pattern, puisque la dégradation d'un motif d'identification n'empêche pas de détecter la présence d'au moins un pattern parmi l'ensemble des motifs d'identification marqués sur l'article.

Les motifs d'identification peuvent être tous identiques ou tous différents dans leur représentation.

L'article peut en outre comprendre des motifs d'identification identiques et des motifs d'identification différents dans leur représentation, c'est-à-dire dont les états valides utilisés pour la représentation des différents symboles ne sont pas les mêmes pour tous les symboles du motif de référence utilisé.

Selon un autre aspect, l'invention propose également un procédé de marquage d'un article avec un motif d'identification pouvant comporter une information relative à l'article et/ou son utilisation. Le procédé comprend les étapes suivantes :
- on définit un alphabet constitué de plusieurs symboles ;
- on définit, pour chaque symbole, au moins deux états valides et au moins un état invalide ;
- on élabore un motif de référence ou pattern comportant un ensemble de symboles de l'alphabet précité ;
- on élabore au moins une représentation dudit motif de référence ou pattern en affectant à chaque symbole du motif de référence ou pattern un état valide spécifique ;
- enfin, on applique sur l'article un marquage reproduisant ladite représentation du motif de référence ou pattern.

Grâce à la structure du motif d'identification utilisé, les aspérités du support ou la qualité d'impression ne peuvent le dégrader car plusieurs symboles du motif d'identification peuvent être altérés sans pour autant empêcher une identification ultérieure de celui-ci.

On peut représenter chaque symbole par au moins deux éléments ayant une première représentation possible et une deuxième représentation possible.

De préférence, chaque état valide comprend un groupe d'au moins un élément représenté selon la première représentation et d'au moins un élément représenté selon la deuxième représentation, chaque état valide d'un symbole étant différent d'un état valide d'un autre.

Selon un autre mode de mise en oeuvre, chaque état invalide d'un symbole est différent des états valides de l'un quelconque des symboles de l'alphabet.

Les états valides de tous les symboles peuvent être représentés par un groupe d'éléments comprenant le même nombre d'éléments.

Dans un autre aspect, l'invention propose en outre un procédé d'identification d'un motif d'identification appliqué sur un article et pouvant comporter une information relative à l'article et/ou son utilisation. Le procédé comprend les étapes suivantes :
- on capture une image d'une zone de l'article sur laquelle figure au moins une partie d'une représentation d'au moins un motif de référence ou pattern mémorisé comprenant un arrangement de plusieurs symboles appartenant à un alphabet mémorisé, chaque symbole comprenant au moins deux états valides et au moins un état invalide, chaque représentation d'un symbole dans ledit arrangement correspondant à un état valide dudit symbole, et on mémorise l'image capturée ;
- on identifie les symboles de l'alphabet de symboles mémorisé en comparant l'image capturée avec l'arrangement de représentations de symboles du motif de référence ou pattern mémorisé ;
- on calcule le nombre de symboles identifiés représentés dans un état valide et arrangés selon l'arrangement dudit motif de référence ou pattern mémorisé ;
- on compare le résultat du calcul à un seuil de probabilité ;
- et on émet un signal d'identification si le résultat atteint ledit seuil.

Selon encore un autre mode de mise en oeuvre, on définit un premier symbole dans une première position de l'arrangement du motif de référence ou pattern mémorisé ; on recherche dans l'image capturée une représentation d'au moins un état valide dudit premier symbole ; si on trouve cette représentation on considère que le symbole sélectionné est identifié, puis on définit un autre symbole dans une autre position de l'arrangement du motif de référence ou pattern mémorisé, et on réitère l'étape précédente de recherche pour cet autre symbole dans cette autre position et ainsi de suite jusqu'à l'identification ou non de tous les symboles du motif de référence ou pattern mémorisé.

Dans un autre mode de mise en oeuvre, le procédé comprend une étape de déchiffrement d'au moins une information numérique représentée par au moins un état valide d'au moins un symbole du motif d'identification comprenant une identification de ladite information numérique à partir d'au moins un état valide d'au moins un symbole identifié.

Dans tous les cas, le procédé d'identification est particulièrement robuste du fait qu'il nécessite à la fois la reconnaissance des états d'une pluralité de symboles mémorisés et la reconnaissance d'un arrangement spécifique d'un certain nombre de ces symboles dans un état valide, cet arrangement constituant un motif de référence ou pattern mémorisé.

D'autres avantages et caractéristiques de l'invention apparaîtront à l'examen de la description détaillée de quelques exemples de modes de mise en oeuvre et de réalisation, nullement limitatifs, et des dessins annexés, sur lesquels :
- la figure 1 illustre schématiquement un mode de mise en oeuvre d'une élaboration d'un motif d'identification selon l'invention ;
- la figure 2 illustre schématiquement un mode de mise en oeuvre d'une élaboration d'un autre motif d'identification;
- la figure 3 illustre schématiquement un mode de mise en oeuvre d'un procédé de marquage du motif d'identification de la figure 1 sur un article ; et
- la figure 4 illustre schématiquement un mode de mise en oeuvre d'un procédé d'identification d'un motif d'identification appliqué sur un article.

Dans les figures, les mêmes références correspondent aux mêmes éléments. Les éléments des figures ne sont pas nécessairement dessinés à l'échelle.

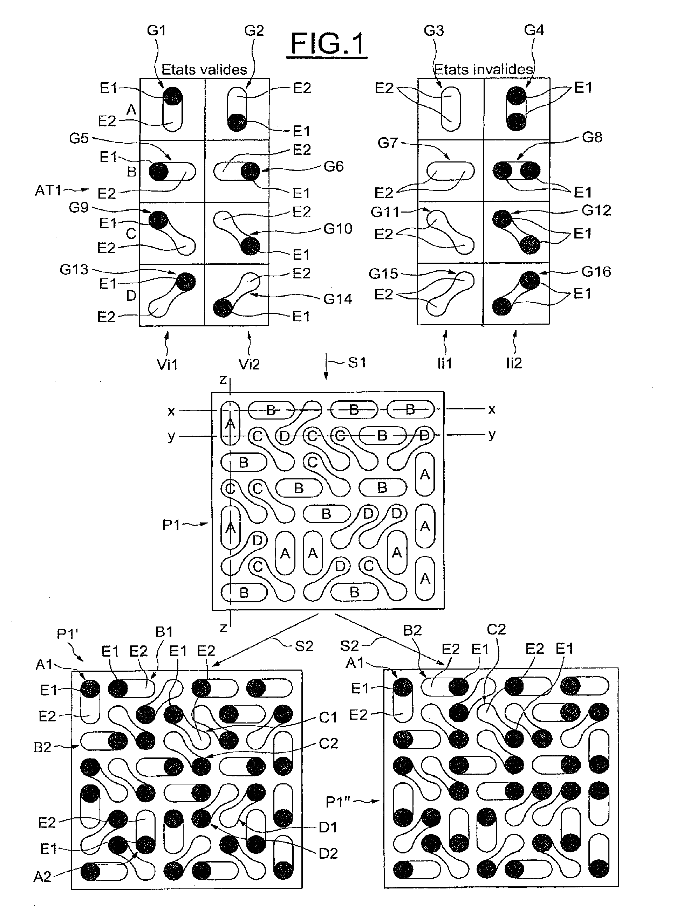

Sur la figure 1, on a représenté schématiquement un mode de mise en oeuvre d'une élaboration S1 d'un motif de référence ou pattern bidimensionnel P1 selon l'invention.

Ce pattern P1, comprend un arrangement de quatre symboles A,B,C,D, déterminés à partir d'un alphabet AT 1.

On entend ici par motif de référence bidimensionnel ou pattern, un arrangement de plusieurs symboles bidimensionnels qui sont agencés les uns par rapport aux autres dans une position déterminée.

On entend par arrangement de symboles, une disposition particulière des symboles bidimensionnels dans le pattern.

On entend par motif d'identification, une représentation possible parmi toutes les représentations des symboles du motif de référence ou pattern.

On entend ici par symbole, un ensemble bidimensionnel d'éléments. Un élément d'un symbole peut être, par exemple un point, ou un ensemble de points tel qu'une lettre d'alphabet, une aspérité tel un renfoncement, un trou, un ergot. Un élément peut également être, par exemple, une couleur, une réflexion d'ondes électromagnétiques.

L'ensemble de ces symboles forme ce que l'on appelle ici un alphabet. Dans cet alphabet, les symboles sont différents les uns des autres même si les symboles peuvent comprendre des éléments d'un même type tel que décrit ci avant.

Selon l'invention, chaque symbole de l'alphabet comprend plusieurs états, en particulier plus de deux états, c'est-à-dire au moins trois états.

Un état est une représentation possible d'un symbole. Par exemple, si un symbole est une lettre, une représentation possible d'un état est une lettre en minuscule, un autre état ou autre représentation possible est la même lettre en majuscule, encore un autre état ou représentation différente est la même lettre de couleur rouge, etc....

Si le symbole est un mot, une représentation d'un état peut être un mot écrit de gauche à droite ou inversement. Si le symbole est un ensemble de points, une représentation possible d'un état peut être un seul point, une paire de points, une autre représentation peut être un non point, en d'autres termes une absence de point, une paire de non points etc....

Un état valide d'un symbole est un état arbitrairement choisi ou autorisé parmi tous les états possibles de ce symbole. En d'autres termes, un état valide est une représentation unique parmi toutes les représentations possibles des états du symbole.

Un état invalide est, a fortiori, un état non autorisé, c'est-à-dire une autre représentation, distincte de celle utilisée pour les états valides du même symbole. Il faut noter qu'un état invalide d'un symbole, pour un alphabet déterminé, peut être identique à un état valide d'un autre symbole de l'alphabet déterminé.

Sur la figure 1, on a représenté un exemple d'un alphabet AT1 qui comprend quatre symboles A,B,C,D. Chaque symbole A,B,C,D comprend deux états valides Vi1, Vi2 et deux états invalides Ii1, Ii2. Chaque état de tous les symboles comprend deux groupes d'éléments G1 à G16. Dans ce mode de mise en oeuvre, chaque groupe G1 à G16 comprend deux éléments. Chaque élément comprend une première représentation E1 correspondant à un point, c'est-à-dire un cercle plein et une deuxième représentation E2 correspondant à un non point, c'est-à-dire un cercle vide ou encore une absence de point.

Comme on le voit sur la figure 1, le symbole A de l'alphabet AT1 présente un premier état valide Vi1 pour lequel le groupe G1, disposé verticalement, est formé par un point E1, en partie haute et un non point E2 en partie basse.

Le symbole A présente un deuxième état valide Vi2 pour lequel le groupe G2, également disposé verticalement, est formé par un non point E2 en partie haute et un point E1, en partie basse. Les deux états valides Vi1 et Vi2 peuvent par exemple représenter les valeurs respectives 0 et 1 de façon à réaliser une codification binaire d'une information.

Le même symbole A présente deux états invalides Ii1 et Ii2 comprenant deux groupes G3 et G4 de deux éléments chacun disposés verticalement. Dans le premier état invalide, Ii1, le groupe G3 est formé par deux non points E2 l'un au dessus de l'autre tandis que, dans le deuxième état invalide Ii2, le groupe G4 est formé par deux points E1, situés l'un au dessus de l'autre en étant cependant séparés par un écartement.

Le symbole B présente un état valide Vi1, pour lequel le groupe G5, disposé horizontalement, est formé par un point E1 en partie latérale gauche sur la figure 1, et un non point E2 en partie latérale droite sur la figure 1. Le symbole B présente un deuxième état valide Vi2, pour lequel le groupe G6 également disposé horizontalement, est formé par un non point E2 disposé à gauche sur la figure 1 et un point E1 disposé à droite sur la figure 1. Le même symbole B présente deux états invalides Ii1 et Ii2, comprenant deux groupes de deux éléments G7 et G8 disposés horizontalement. Dans le premier état invalide Ii1, le groupe G7 est formé par deux non points E2 disposés horizontalement côte à côte, tandis que dans le deuxième invalide Ii2, le groupe G8 est formé par deux points E1 disposés côte à côte en étant cependant séparés par un écartement central.

Le symbole C présente un état valide Vi1 pour lequel un groupe G9 disposé en diagonale dans une première direction sur la figure 1, est formé par un point E1 placé en haut à gauche sur la figure 1 et un non point E2 placé en bas à droite. Le deuxième état valide Vi2 du symbole C présente un groupe G10 également disposé en diagonale selon la même direction que le groupe G9, et formé par un non point E2 situé en haut à gauche sur la figure 1, et un point E1 situé en bas à droite sur la figure 1. Le même symbole C présente deux états invalides Ii1 et Ii2 comprenant deux groupes de deux éléments G11 et G12, orientés de façon diagonale selon la même direction que les groupes G9 et G10 des deux états valides Vi1 et Vi2 du même symbole C. Le groupes G11 et G12 sont formés respectivement par deux non points E2 et deux points E1 disposés aux extrémités de la diagonale et séparés par un écartement central.

Le symbole D présente deux états valides Vi1 et Vi2, formés par les groupes G13 et G14, disposés en diagonale dans une direction opposée à la direction des groupes G9 à G12. Le groupe G13 correspondant au premier état valide Vi1 du symbole D est formé par un point E1 placé en haut à droite et un non point E2 placé en bas à gauche sur la figure 1. Le groupe G14 correspondant au deuxième état valide Vi2 du symbole D est formé par un non point E2 placé en haut à droite et un point E1 placé en bas à gauche sur la figure 1.

Les deux états invalides Ii1 et Ii2 du symbole D correspondent aux deux groupes G15 et G16 comprenant chacun deux éléments orientés en diagonale dans la même direction que les groupes G13 et G14. Le groupe G15 est formé de deux non points E2 tandis que le groupe G16 est formé de deux points E1 placés aux extrémités de la diagonale et séparés par un écartement central.

Lors de l'étape S1 d'élaboration, on construit un motif de référence ou pattern P1 à partir des symboles A, B, C, D appartenant à l'alphabet AT1. Dans ce mode de mise en oeuvre, le pattern P1 comprend trente-deux symboles dont un agencement particulier a été déterminé de manière spécifique, par exemple en fonction de l'information que le motif de référence ou pattern doit véhiculer. On voit sur la figure 1 que le motif de référence ou pattern P1 est construit à partir d'une disposition verticale, horizontale ou en diagonale des différents groupes G1 à G16. Les 32 symboles A, B, C et D sont disposés de manière imbriquée les uns dans les autres comme illustré sur la figure 1.

Comme on le voit notamment sur la figure 1, l'imbrication des différents symboles est faite de préférence de manière que les différents points et non points soient, dans cet exemple, alignés verticalement et horizontalement. A titre d'exemple, on notera que sur la première ligne horizontale supérieure X-X illustrée à la figure 1 du motif de référence ou pattern P1, on trouve successivement en partant de la gauche vers la droite, un élément du symbole A dont le groupe d'éléments est disposé verticalement, deux éléments du symbole B disposés horizontalement, un élément du symbole D disposé en diagonale dans la deuxième direction précitée, deux éléments du symbole B disposés horizontalement et deux éléments du symbole B également disposés horizontalement. La deuxième ligne horizontale du motif de référence ou pattern P1 notée Y-Y sur la figure 1, comporte le deuxième élément du symbole A dont le premier élément était sur la première ligne X-X, et, toujours en allant de la gauche vers la droite, un élément du symbole C disposé en diagonale dans la première direction précitée, le deuxième élément du symbole D disposé en diagonale dont le premier élément faisait partie de la première ligne X-X, successivement les éléments des deux symboles C, deux éléments du symbole B et un élément du symbole D.

De la même manière, la première ligne verticale notée Z-Z du motif de référence ou symbole P1 illustré sur la figure 1 est formée, en allant du haut vers le bas, par deux éléments du symbole A disposés verticalement, un élément du symbole B disposé horizontalement, un élément du symbole C disposé en diagonale dans la première direction, deux éléments du symbole A disposés verticalement, un élément du symbole D disposé en diagonale selon la deuxième direction et un élément du symbole B disposé horizontalement.

On comprendra bien entendu qu'une disposition différente pourrait être adoptée. Il est cependant avantageux d'imbriquer convenablement les différents symboles de manière à rendre la détection plus difficile pour une personne ignorant la construction du motif de référence ou pattern et l'alphabet utilisé.

On notera en outre que, dans l'exemple illustré, chacun des symboles A, B, C et D présente deux états valides Vi1 et Vi2, dans lesquels les différents groupes de deux éléments comportent chaque fois un point et un non point. En revanche, les états invalides Ii1 et Ii2 des quatre symboles A, B, C et D sont chaque fois constitués par un groupe de deux éléments de nature identique, c'est-à-dire deux points ou deux non points. Cette structure particulière augmente encore la robustesse du motif de référence ou pattern qu'il est possible d'élaborer par l'opération d'élaboration S1.

Il existe ensuite plusieurs possibilités telles que P1', P1"... pour représenter le pattern P1 ainsi élaboré. Ces représentations P1',P1" du pattern P1 sont également notées par la suite motifs d'identification. En effet, compte tenu du fait que chaque symbole A,B,C,D peut être représenté par deux états valides distincts Vi1,Vi2, et que le pattern P1 comporte 32 symboles, il existe 2³² = 4 294 967 296 possibilités pour représenter le pattern déterminé P1. Selon un autre exemple, si le pattern comporte 64 symboles, il existe alors 2⁶⁴ = 18446744073709551616 possibilités pour représenter le pattern déterminé P1. Ainsi, chaque représentation d'un pattern tel que P1 peut correspondre à une information, ce qui permet de caractériser un article sur lequel est apposé une représentation possible du pattern. Par exemple on peut caractériser l'origine de fabrication de l'article, son lieu de distribution, etc. Toutes ces informations permettent d'identifier de façon unique un article, et ainsi de lutter contre les contrefaçons, si ledit article est par exemple distribué par une personne non habilitée. En variante, l'information est exclusivement référencée dans l'arrangement spécifique du motif de référence ou pattern P1, l'élaboration des différentes représentations P1', P1" etc se faisant de manière aléatoire de façon à rendre l'information contenue dans le motif de référence ou pattern P1 totalement indétectable.

On a illustré sur la figure 1, deux possibilités de représentation P1',P1" du pattern P1 obtenues par l'opération S2. Pour chaque possibilité P1',P1", on a représenté les éléments E1,E2 des états valides Vi1,Vi2 des symboles A,B,C,D du pattern P1. On remarquera par exemple, sur la représentation P1', le symbole A1 représenté par son état valide Vi1 tel qu'illustré sur la figure 1, c'est-à-dire avec un point E1 en partie haute et un non point E2 en partie basse. On note également sur la première ligne horizontale du motif d'identification P1' le symbole B1 dans son état valide Vi1, c'est-à-dire avec un point E1 sur la gauche de la figure et un non point E2 sur la droite de la figure. On note également, toujours sur le motif d'identification P1', le symbole C1 dans son premier état valide Vi1, c'est-à-dire avec un point E1 en haut à gauche et un non point E2 en bas à droite, ces deux éléments étant disposés en diagonale selon la première direction précitée. On note également sur la représentation P1' les symboles A2, B2 et C2 utilisant le deuxième état valide Vi2 ainsi que les symboles D1, D2 utilisant respectivement les états valides Vi1 et Vi2.

Dans la représentation P1", on peut noter que le symbole A1 indiqué précédemment sur la représentation P1' est identique tandis que le symbole B1 est remplacé par B2 représenté avec son deuxième état valide Vi2, à savoir avec un non point E2 sur la gauche et un point E1 sur la droite. En d'autres termes, ce symbole B dans cette position du motif P1 est ici utilisé avec sa représentation correspondant à un autre état valide que dans la représentation P1'. De la même manière, le symbole C mentionné précédemment, et noté C1 sur la figure 1 pour la représentation P1', est utilisé, pour la représentation P1" avec son deuxième état valide Vi2, à savoir avec un non point E2 en haut à gauche et un point E1 en bas à droite et noté C2.

L'observation des deux représentations P1' et P1" illustrées sur la figure 1 montre qu'un certain nombre de symboles A, B, C et D sont ainsi utilisés soit dans un premier état valide Vi1, soit dans un deuxième état valide Vi2, de sorte que les deux représentations P1' et P1" sont totalement différentes, bien que le même motif de référence ou pattern P1 ait été utilisé.

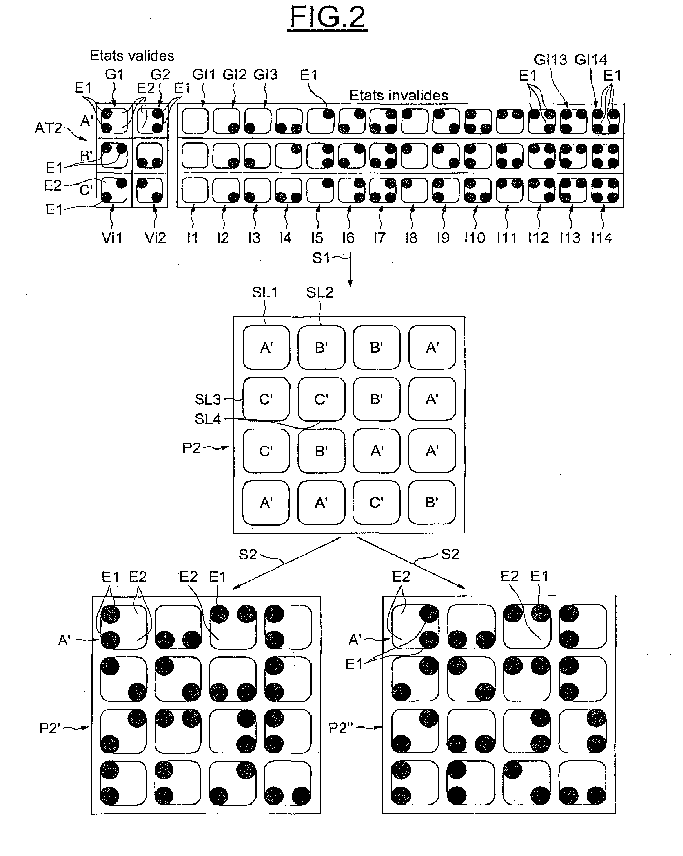

Sur la figure 2, on a représenté de façon schématique un autre mode de mise en oeuvre d'une élaboration S1 d'un motif de référence ou pattern P2.

On a représenté sur la figure 2 un alphabet AT2 qui comprend trois symboles A',B',C'. Chaque symbole A',B',C' comporte deux états valides Vi1, Vi2 et quatorze états invalides I1 à 114. Comme dans l'exemple précédent, les deux états valides Vi1 et Vi2 peuvent représenter les valeurs respectives 0 et 1 en vue d'une codification binaire d'une information dans un motif d'identification. Chaque état de tous les symboles comprend un groupe d'éléments tels que G1 et G2 pour les deux états valides Vi1 et Vi2 ou GI1, GI2, GI3...GI13, GI14 pour les états invalides I1 à I14. Chaque groupe d'éléments G1 à GI14 comprend quatre éléments présentant chacun une première représentation E1 correspondant à un point, c'est-à-dire un cercle plein et une deuxième représentation E2 correspondant à un non point, c'est-à-dire un cercle vide ou encore une absence de point. Dans l'exemple illustré sur la figure 2, les deux groupes G1 et G2 correspondant aux deux états valides Vi1, Vi2 comportent chaque fois deux représentations E1 c'est-à-dire deux points pleins, et deux représentations E2 c'est-à-dire deux non points. L'avantage d'un tel choix est qu'un motif d'identification P2',P2", obtenu comme il sera indiqué par la suite, est homogène, c'est-à-dire que chaque groupe G1, G2 correspondant aux deux états valides, comporte la même densité de points E1. Si ces éléments ou points E1 sont réalisés par l'impression d'une encre, il en résulte que la densité surfacique de l'encre sur le motif reste constante.

Comme on peut le voir sur la figure 2, chaque groupe de deux éléments pour les différents symboles A', B' et C' se présente approximativement sous la forme d'un carré aux quatre coins duquel sont disposés les points E1 et les non points E2. C'est ainsi que pour le symbole A' dans l'état valide Vi1, deux points E1 sont alignés verticalement sur la partie gauche de ce carré par rapport à la figure 1 et deux non points E2 sont alignés verticalement sur la partie droite du carré. Pour l'état valide Vi2 du même symbole A', deux points E1 sont alignés verticalement sur le côté droit du carré et deux non points E2 sont alignés sur la partie gauche du carré.

Pour le symbole B', deux points E1 sont alignés horizontalement dans la partie haute du carré pour l'état valide Vi1, et, dans la partie basse du carré, pour l'état valide Vi2. Pour le symbole C', deux points E1 sont disposés diagonalement opposés à deux angles du carré selon une diagonale orientée dans une première direction pour l'état valide Vi1, et, selon l'autre diagonale orientée dans l'autre direction pour l'état valide Vi2. Les non points E2 sont chaque fois disposés aux coins qui sont laissés libres par les points E1.

Les différents états invalides peuvent comporter pour chacun de leurs groupes GI1 à GI14 : aucun point E1, un point E1 unique, deux points E1 ou encore trois ou quatre points E1, comme par exemple pour le groupe GI14. Là encore, les non points E2 sont disposés aux emplacements laissés libres par les points E1.

Cet alphabet AT2 étant ainsi défini, il est possible de créer un motif de référence ou pattern P2 au cours d'une étape d'élaboration notée S1 sur la figure 2, en disposant un certain nombre de symboles A', B' et C' selon un arrangement déterminé. Dans l'exemple illustré sur la figure 2, le motif de référence ou pattern P2 se présente sous la forme d'un carré comportant 16 symboles A', B' et C' selon un arrangement spécifique illustré sur la figure 2.

Au cours d'une étape notée S2, on affecte à chaque symbole du motif de référence ou pattern P2 l'un des deux états valides Vi1 ou Vi2. Cette affectation se fait d'une manière aléatoire ou déterminée spécifiquement en fonction d'une information que le motif de référence ou pattern doit représenter. Sur la figure 2, on a représenté à titre d'exemple deux possibilités de représentation notées P2' et P2". On comprendra bien entendu qu'un grand nombre d'autres possibilités peuvent être envisagées avec les deux états valides Vi1 et Vi2. Les deux représentations P2' et P2" sont différentes par l'utilisation pour certains des symboles du motif de référence ou pattern P2 d'états valides différents. C'est ainsi que le symbole A' situé au coin supérieur gauche de la représentation P2 est représenté sous la forme de l'état valide Vi1 correspondant au groupe G1 de l'alphabet AT2. Le même symbole A' dans le coin supérieur gauche de la représentation P2" est représenté sous la forme de l'état valide Vi2 correspondant au groupe G2.

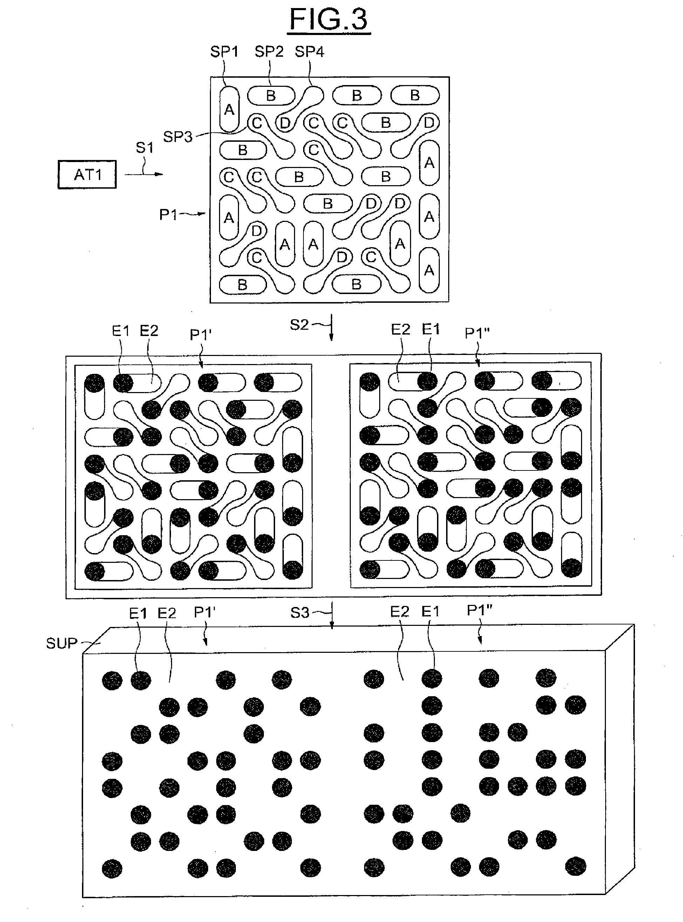

Sur la figure 3, on a représenté schématiquement un mode de mise en oeuvre d'un procédé de marquage d'un article SUP à l'aide de deux représentations P1' et P1" d'un motif de référence ou pattern P1 tel que décrit et illustré sur la figure 1.

Ce procédé comprend l'étape S1 d'élaboration d'un motif de référence ou pattern P1 comprenant un arrangement de trente-deux symboles A,B,C,D, comme décrit en relation avec la figure 1, une étape S2 d'affectation d'états valides au pattern élaboré P1 et une étape de marquage S3 des représentations obtenues P1' et P1" des états valides des symboles A, B, C et D sur l'article SUP.

On entend par marquage, une impression, par exemple d'encre, une gravure, c'est-à-dire une réalisation de creux et de bosses sur un support, par exemple un support métallique, ou tout type de représentation connue d'un motif sur un article. Ce marquage peut être visible, lorsqu'il est par exemple réalisé dans l'échelle du visible, ou invisible lorsqu'il est réalisé sous la forme de signes, par exemple magnétiques uniquement détectables par des appareils de mesure appropriés.

Plusieurs moyens permettent de rendre le motif d'identification indétectable à l'oeil nu. Par exemple, on peut utiliser une encre dont la nature chimique la rend invisible à l'oeil nu mais simplement visible sous éclairage spécifique, par exemple à l'aide d'éclairage à ultraviolets ou à infrarouges.

Avantageusement, afin de renforcer la sécurité du marquage des représentations du motif de référence, on peut utiliser des encres dont la nature chimique la rend invisible à l'oeil nu. La composition de cette encre peut comprendre un ou plusieurs pigments et/ou des colorants qui absorbent dans le visible ou invisible du spectre électromagnétique et/ou peut également comprendre un ou plusieurs pigments et/ou des colorants qui sont luminescents. Des exemples non limitatifs de pigments appropriés et/ou des colorants qui absorbent dans le visible ou invisible du spectre électromagnétique englobent les dérivés de phtalocyanine. Des exemples non limitatifs de pigments luminescents appropriés et/ou des colorants comprennent les dérivés de lanthanides. La présence de pigment (s) et/ou un colorant (s) permet d'améliorer et de renforcer la sécurité du marquage contre la contrefaçon.

On peut également mélanger le motif d'identification avec un bruit, par exemple en intégrant le motif d'identification dans un environnement de la surface de l'article SUP, par exemple des irrégularités préexistantes. Ces irrégularités doivent être comparables à la taille du pattern.

Par ailleurs, on peut utiliser une échelle d'impression très petite, de 150 à 500 unité dpi, (Dot Per Inch en langue anglaise, ou Point Par Pouce, c'est-à-dire un nombre de pixels par pouce, un pouce équivalant à 2,54 centimètres) qui traduit la précision de l'impression. Avec une telle échelle d'impression, le motif d'identification ne peut se différencier à l'oeil nu du fond du support d'impression. En outre, la reproduction du motif d'identification nécessiterait alors d'utiliser une échelle encore plus fine afin d'éviter toute erreur de reproduction, ce qui est quasi impossible en pratique. Comme illustré sur la figure 3, lors de l'étape d'élaboration S1 du pattern P1, on détermine un agencement particulier de symboles parmi les symboles A,B,C,D de l'alphabet AT1 comme expliqué plus haut. Puis, lors de l'étape d'affectation S2, on affecte un état valide Vi1 ou Vi2 à chaque symbole du pattern P1, de manière à obtenir différentes représentations possibles P1', P1"... parmi toutes les représentations possibles.

Puis, lors de l'étape de marquage S3, on marque la ou les représentations telles que P1', P1"... du pattern P1 sur l'article SUP en marquant les représentations E1,E2 des états valides Vi1,Vi2 qui ont été affectés à chaque symbole du pattern P1.

Le motif d'identification P1',P1" permet de coder une information concernant l'article SUP et/ou son mode d'utilisation.

Dans l'exemple illustré sur la figure 3, on a marqué sur l'article SUP deux représentations P1',P1" du pattern P1. En d'autres termes, on a marqué sur l'article SUP, pour chaque représentation P1',P1" du pattern P1, les représentations point/non point, de chaque symbole A,B,C,D du pattern P1. On pourrait bien entendu ne marquer sur l'article qu'une seule représentation telle que P1', ou encore, un nombre plus important de représentations du motif de référence ou pattern P1.

Par ailleurs, le fait d'élaborer un alphabet où les états invalides des symboles comprennent les mêmes représentations que celles utilisées pour les états valides, mais dans un arrangement différent, rend la reconnaissance du motif d'identification plus difficile. Si l'on prend l'exemple de l'alphabet AT2, en effet, l'état invalide 110 pour le symbole B' correspond à l'état valide Vi1 de A'. Celui qui ne connaîtrait pas le motif de référence ou pattern P2 pourrait donc faire une lecture incorrecte en croyant détecter le symbole A'. La connaissance du motif de référence ou pattern P2 permet cependant de situer correctement le symbole A' et de lever l'ambiguïté.

Si l'utilisateur ne connaît pas préalablement le motif de référence ou pattern, il est donc quasi impossible qu'il puisse le reconnaître parmi les états représentés sur l'article SUP. En particulier il existe une chance sur 4 294 967 296 de déterminer le pattern P1, lorsque celui-ci comporte trente-deux symboles comme illustré sur les figures 1 et 3. Dans le cas où le pattern P1 comporte soixante-quatre symboles, il existe alors une chance sur 2⁶⁴ pour déterminer le pattern P1.

Le motif de référence ou pattern P1 ou P2 peut également être utilisé pour chiffrer une information numérique. On utilise alors les états valides Vi1,Vi2 des symboles du motif de référence ou pattern pour coder cette information numérique. Cette information numérique peut être une valeur numérique de type binaire.

Par exemple, on peut coder la valeur binaire 1100 (ou 12 en décimal) avec les quatre premiers symboles SP1,SP2,SP3,SP4 illustrés sur la figure 3 du pattern déterminé P1. Pour cela, on peut établir le code suivant, pour chaque symbole A,B,C,D du pattern déterminé P1 : le premier état valide Vi1 correspond à la valeur 1 et le deuxième état valide Vi2 correspond à la valeur 0. Dans ce cas, le premier symbole SP1 du pattern déterminé P1 correspond à la valeur 1, le deuxième symbole SP2 du pattern déterminé P1 correspond à la valeur 1, le troisième symbole SP3 du pattern déterminé P1 correspond à la valeur 0, le quatrième symbole SP4 du pattern déterminé P1 correspond à la valeur 0. Ainsi les quatre premiers symboles représentent la valeur décimale 12. On peut également choisir d'autres codes pour lesquels chaque premier état valide des symboles du pattern P1 correspond à 1 ou 0, suivant le code choisi. Cette information numérique peut être une date de naissance, une référence d'un produit, par exemple une référence de son lieu de fabrication, de son lieu de distribution, de son contenu, une donnée caractéristique de l'article sur lequel est représenté le pattern, etc.

Le procédé de marquage à partir du motif de référence ou pattern P2 illustré sur la figure 2 se déroule de la même manière avec, lors de l'étape de marquage S3, l'utilisation d'une ou plusieurs représentations P2', P2"... du motif de référence ou pattern P2 sur un article SUP.

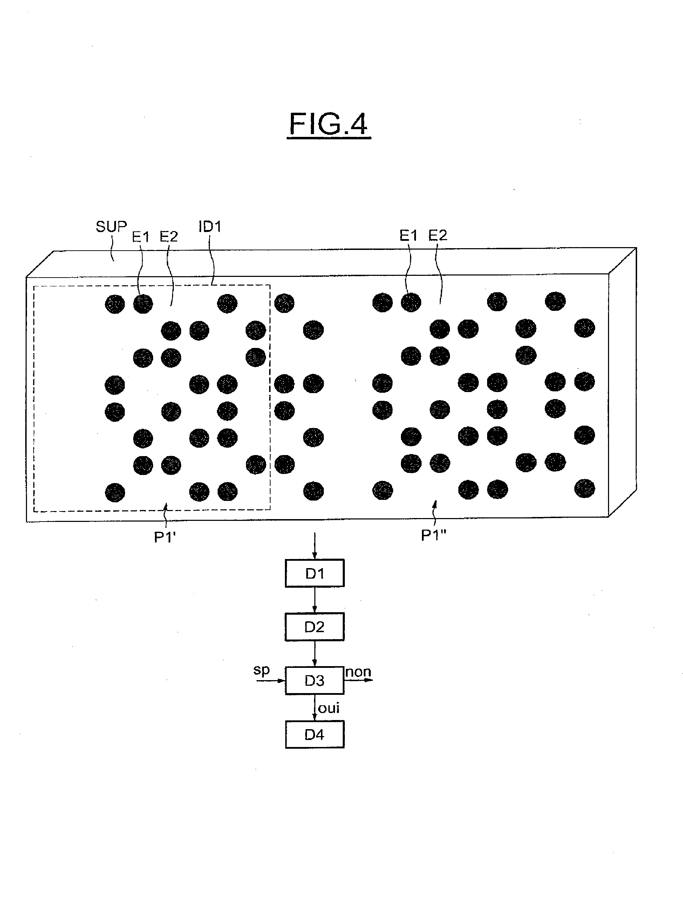

Sur la figure 4, on a représenté un mode de mise en oeuvre d'un procédé d'identification d'un motif d'identification P1',P1", apposé ou marqué sur l'article SUP.

On mémorise au préalable un alphabet et un motif de référence ou pattern, c'est-à-dire un arrangement particulier d'un certain nombre de symboles de l'alphabet mémorisé.

Dans l'exemple illustré, le procédé d'identification comprend une étape D1 dans laquelle on capture une image d'une zone de l'article SUP, une étape D2 d'identification de symboles, et une étape D3 d'identification du motif d'identification P1',P1". En outre, ce procédé peut comprendre une étape D4 de déchiffrement d'une information numérique.

Lors de l'étape D1, on capture une image ID1 d'une zone de l'article SUP avec, par exemple, une caméra de décodage, l'image étant stockée dans une mémoire. Puis on identifie lors de l'étape D2 les symboles contenus dans cette image mémorisée ID1 à partir de l'alphabet mémorisé qui a été utilisé lors du marquage des représentations P1', P1" sur l'article SUP.

L'étape d'identification D2 de symboles s'applique à une image capturée qui comporte un ou plusieurs motifs d'identification.

On connaît au préalable l'arrangement des symboles du motif de référence ou pattern et donc la position de chaque symbole dans le motif de référence.

On superpose donc le motif de référence mémorisé sur une zone de l'image capturée. Puis on sélectionne un symbole du motif de référence, par exemple un premier symbole positionné en haut à gauche du motif de référence, et on détermine la représentation d'un symbole de l'alphabet contenue dans la zone de l'image capturée située à la même position que celle du symbole sélectionné. Si la représentation déterminée correspond à au moins une représentation d'un état valide du premier symbole sélectionné du motif de référence, on considère que le symbole sélectionné dans le motif de référence a été identifié dans la zone de l'image capturée. Dans le cas contraire, on considère que le symbole sélectionné n'a pas été identifié.

Puis, on sélectionne un autre symbole du motif de référence, de préférence un symbole immédiatement voisin du précédent, et on réitère la comparaison de la représentation de symbole de la zone de l'image située à la position du deuxième symbole sélectionné avec les représentations des états valides de ce dernier. Si la représentation de symbole de l'image correspond à au moins une représentation d'un état valide du deuxième symbole, le deuxième symbole est considéré comme identifié. Puis on réitère l'étape précédente pour chaque symbole du motif de référence en comparant une représentation de l'image située à la même position que le symbole sélectionné du motif de référence avec les représentations des états valides de ce dernier jusqu'à l'identification ou non de tous les symboles du motif de référence.

Si on identifie au moins un symbole, on effectue l'étape suivante D3 d'identification du motif d'identification, dans le cas contraire, on peut, par exemple déplacer la caméra, ou l'article, et réitérer le procédé à partir d'une nouvelle image capturée, soit on se déplace dans l'image capturée d'un pas égal à la hauteur ou à la largeur d'un symbole de l'alphabet mémorisé et on réitère le procédé dans une autre zone de l'image capturée. Le déplacement physique, dans le but de capturer une nouvelle image, peut se faire en déplaçant la caméra, par exemple, pas à pas, la largeur d'un pas correspondant sensiblement à la largeur ou une hauteur d'une représentation d'un élément d'un symbole, ou en déplaçant l'article tout en gardant fixe la caméra. Le déplacement dans l'image capturée peut se faire par des moyens logiciels selon un pas déterminé en nombre de pixels en fonction de la résolution de l'image.

Dans une réalisation pratique, on peut prévoir une assez grande quantité de motifs d'identification disposés sur l'article, côte à côte et les uns au dessus des autres par exemple 20 x 20 motifs d'identification. La caméra de visualisation peut alors être fixe et embrasser un grand nombre de motifs d'identification pour réaliser l'identification précitée.

Lorsqu'on effectue l'étape D3, on calcule le nombre de symboles identifiés. Si tous les symboles sont identifiés, on considère que le motif d'identification a été identifié. On entend ici par symbole identifié, un symbole détecté dans l'image ID1 qui correspond à un symbole du motif de référence mémorisé, et qui est en outre agencé sur l'article selon l'arrangement des symboles du motif de référence.

Si au contraire, les symboles détectés dans l'image ID1 ne sont pas tous identiques à ceux du motif de référence mémorisé, on calcule alors le nombre de symboles identifiés, et si ce nombre est supérieur à un seuil de probabilité, on considère que le motif d'identification a été identifié.

Par exemple, selon un mode de réalisation préféré, le motif de référence ou pattern bidimensionnel a une dimension 16x16, c'est-à-dire qu'il comprend 256 états, soient 128 paires d'états. Dans ce cas, on estime qu'une reconnaissance de trente paires d'états, correctement arrangées par rapport au motif de référence, suffit pour estimer que le motif d'identification a été reconnu. En d'autres termes, si l'on considère un alphabet comprenant des symboles dont les états valides sont représentés par une paire d'états, et qu'un motif de référence de dimension 16x16 comprend 128 symboles, il suffit d'identifier 30 symboles sur les 128 symboles du motif d'identification, pour estimer que le motif d'identification a été identifié. Dans ce cas, le seuil de probabilité est égale à environ 24%.

Selon un autre exemple, si l'on considère un alphabet comprenant des symboles dont les états valides sont représentés par quatre états, et qu'un motif de référence de dimension 16x16 comprend 64 symboles, il suffit d'identifier 10 symboles sur les 64 symboles du motif d'identification, pour estimer que le motif d'identification a été identifié. Dans ce cas, le seuil de probabilité est égale à environ 16%.

Une altération partielle d'un certain nombre de symboles d'un motif d'identification peut donc être tolérée. Ce qui permet d'affirmer la robustesse de l'identification du motif d'identification.

Si le pourcentage de symboles identifiés est suffisant, on considère alors que le motif d'identification contenu dans l'image correspond à une représentation du motif de référence qui a été mémorisé. Ce seuil de probabilité permet de tolérer les erreurs de lecture des représentations contenues dans l'image, ou les erreurs de représentation du motif d'identification lors du marquage de ce dernier sur l'article.

On notera que lors du marquage des états valides du motif de référence ou pattern sur l'article, des états invalides semblent apparaître du fait de l'alphabet utilisé où les symboles comprennent au moins un état invalide. Cela rend encore plus difficile à un utilisateur non autorisé de déterminer les symboles valides, et de ce fait rend le motif d'identification quasi indétectable.

On tolère une marge de déplacement en hauteur et en largeur pour chaque point de chaque symbole. De légères différences de diamètre dans les points ou tâches qui définissent les représentations des symboles n'altèrent pas la détection. De légères différences de position n'altèrent pas non plus la détection puisque la lecture du motif d'identification se fait par comparaison d'une position d'un symbole par rapport à une autre.

Dans le cas où l'on considère que le motif d'identification n'a pas été reconnu, c'est-à-dire si les conditions d'identification définies ci avant ne sont pas valides, on signale (flèche notée « non » sur la figure 4) que l'article n'est pas identifié. Si au contraire l'article est identifié (« flèche notée « oui » sur la figure 4), les informations contenues dans le motif d'identification peuvent être prises en compte, par exemple pour tracer la fabrication de l'article ou pour utiliser l'article d'une certaine manière (température de lavage autorisée, pression de vapeur recommandée etc....).

Selon un autre mode de mise en oeuvre, le motif d'identification peut représenter une information numérique et le procédé d'identification comprend une étape D4 dans laquelle on identifie la valeur de l'information numérique à partir des états valides des symboles du motif d'identification reconnu et du code utilisé lors du chiffrement de ladite information numérique.

Le procédé d'identification peut également comprendre des étapes de corrections d'erreurs classiques afin de déterminer les états valides attendus des symboles qui n'ont pas pu être identifiés lors de l'étape D2 de détermination des états des symboles identifiés.

Ainsi, à l'aide de corrections d'erreur on peut considérer que le les symboles identifiés correspondent à ceux du motif de référence ou pattern déterminé avec une meilleure fiabilité.

On propose également un système de représentation bidimensionnelle d'un motif de référence ou pattern configuré pour mettre en oeuvre le procédé décrit à la figure 3.

Dans un mode de réalisation, le système de représentation comprend au moins une mémoire configurée pour stocker un alphabet tel que AT1 ou AT2 comportant plusieurs symboles, des moyens d'élaboration pour élaborer un motif de référence ou pattern P1 ou P2 à partir de cet alphabet et des moyens de représentation configurés pour représenter au moins une possibilité de représentation du motif de référence ou pattern élaboré P1. Ces moyens de représentation sont en outre configurés pour affecter, de manière aléatoire à chaque symbole dudit motif de référence ou pattern élaboré un état valide parmi les états valides dudit symbole, et pour stocker dans une mémoire les représentations du motif de référence ou pattern P1 issues de l'affectation.

En outre, le système comprend des moyens de marquage pour marquer les représentations du motif de référence ou pattern P1 sur un support SUP. Ces moyens de marquage sont par exemple, des moyens d'impression par jet d'encre ou par laser, des moyens de gravure selon les techniques comme la photogravure, l'héliogravure, la gravure par laser, la gravure à l'aide d'une fraiseuse, ou encore la gravure en creux sur métal (par gravure à l'aide d'un burin ou d'un acide) en fonction de la surface utilisée. En outre, les moyens de marquage peuvent être des moyens d'impression par flexographie, sérigraphie, tampographie (procédé de marquage par transfert d'encre à l'aide d'un tampon souple), lithographie, ou xérographie. Par exemple, les moyens de marquage sont aptes à marquer les représentations du motif de référence ou pattern à l'aide d'une encre visible à l'oeil nu ou invisible à l'oeil nu.

Ces moyens de marquage peuvent encore être des moyens d'impression thermique ou des moyens d'emboutissage qui peuvent être utilisés, par exemple, sur des surfaces polymériques ou métalliques.

Chaque technique de marquage est utilisée en fonction du type d'article sur lequel le ou les motifs d'identification sont marqués.

On propose en outre un système d'identification du motif d'identification obtenu selon le procédé de représentation bidimensionnel décrit à la figure 3, configuré pour mettre en oeuvre le procédé d'identification décrit à la figure 4.

Dans un mode de réalisation, le système d'identification comprend un détecteur, par exemple une caméra numérique, apte à détecter une zone de l'article comprenant des représentations de symboles. Le système d'identification comprend également au moins une mémoire configurée pour stocker un alphabet et un motif de référence ou pattern défini à partir dudit alphabet, des moyens de détermination pour déterminer les symboles ayant un état valide parmi les symboles de la zone détectée, et des moyens de comparaison pour comparer l'ensemble des symboles ayant un état valide et leur arrangement dans la zone détectée avec le motif de référence ou pattern défini stocké en mémoire.

En outre, on peut améliorer la robustesse de l'identification du motif d'identification en disposant plusieurs représentations (identiques ou non) du motif de référence ou pattern sur l'article. On évite ainsi d'avoir à placer l'article selon une position précise lorsque le détecteur est fixe.

Les moyens mentionnés ci avant peuvent être réalisés de façon logicielle au sein d'un microprocesseur et/ou par des circuits logiques.

Le motif d'identification ainsi défini permet une identification robuste d'articles. Un tel motif d'identification est en outre illisible pour l'utilisateur non autorisé et ne dénature pas l'article sur lequel il est inscrit. Ce motif d'identification permet en outre d'identifier de façon sûre un article pour une meilleure traçabilité de l'article. Dans un contexte commercial où il existe de nombreuses contrefaçons, le motif d'identification proposé permet de porter des informations de façon à lutter contre toute utilisation frauduleuse d'articles.

## Revendications

1. Motif d'identification bidimensionnel (P1', P1", P2', P2"), comprenant un arrangement spécifique bidimensionnel de symboles (A,B,C,D),
les différents symboles appartenant à un alphabet prédéterminé de symboles (AT1, AT2),
**caractérisé en ce que**
chaque symbole de l'alphabet comprend une pluralité d'états possibles, dont au moins deux sont des états valides (Vi1, Vi2), utilisables pour la représentation des symboles dans ledit motif d'identification et au moins un est un état invalide (Ii1, Ii2) non utilisable pour la représentation des symboles dans ledit motif d'identification,
chaque symbole apparaît sur ledit motif d'identification selon un des deux états valides,
ledit arrangement spécifique bidimensionnel de symboles correspondant à un arrangement prédéterminé des dits symboles ou motif de référence (P1, P2).

2. Motif selon la revendication 1, dans lequel chaque état valide comprend au moins deux éléments ayant une première représentation (E1) possible et une deuxième représentation (E2) possible distincte de la première représentation.

3. Motif selon la revendication 1 ou 2, dans lequel chaque état des symboles de l'alphabet comprend un groupe d'éléments (G1,G2), chacun desdits groupes d'éléments comprenant au moins deux éléments, chaque élément ayant une représentation possible parmi un ensemble de représentations comprenant une première représentation (E1) et une deuxième représentation (E2) distincte de la première représentation, et dans lequel chaque symbole comprend un premier état valide comprenant un premier groupe (G1) d'au moins un élément représenté selon la première représentation (E1) et d'au moins un élément représenté selon la deuxième représentation (E2), et un deuxième état valide comprenant un deuxième groupe (G2) d'au moins un élément représenté selon la deuxième représentation (E2) et d'au moins un élément représenté selon la première représentation (E1).

4. Motif selon la revendication 3, dans lequel chacun desdits groupes (G1,G2) d'éléments comprend plus de deux éléments, et dans lequel chaque symbole comprend un premier état valide comprenant un premier groupe (G1) formé de plusieurs éléments représentés selon la première représentation (E1) et de plusieurs éléments représentés selon la deuxième représentation (E2), et un deuxième état valide comprenant un deuxième groupe (G2) de plusieurs éléments représentés selon la deuxième représentation (E2) et de plusieurs éléments représentés selon la première représentation (E1).

5. Motif selon l'une des revendications 3 ou 4, dans lequel lesdits groupes (G1,G2) d'éléments comprennent un même nombre d'éléments représentés selon l'une des représentations (E1).

6. Motif selon l'une des revendications 1 à 5, dans lequel au moins un état valide d'au moins un symbole dudit motif représente une information numérique.

7. Motif selon la revendication 6, dans lequel les états valides de chaque symbole représentent respectivement des valeurs binaires d'une information numérique.

8. Article comprenant au moins un motif selon l'une des revendications 1 à 7.

9. Article selon la revendication 8, comprenant plusieurs motifs tous identiques ou tous différents.

10. Article selon la revendication 8, comprenant plusieurs motifs identiques et plusieurs motifs différents.

11. Article selon l'une des revendication 8 à 10, dans lequel ledit article est choisi parmi une boîte, une feuille, une cartouche, une capsule contenant une matière comestible, un bouchon de bouteille, un billet de banque, un passeport, un document de sécurité, une étiquette, une carte, un bon commercial, une pilule pharmaceutique, une montre, un emballage, un semi-conducteur, ou un périphérique d'ordinateur.

12. Procédé de marquage d'un article avec un motif d'identification pouvant comporter une information relative à l'article et/ou son utilisation, comprenant une étape où
- on définit un alphabet (AT1,AT2) constitué de plusieurs symboles, et **caractérisé par le fait que** ce procédé comprend aussi les étapes suivantes :
- on définit, pour chaque symbole, au moins deux états valides et au moins un état invalide,
- on élabore (S1) un motif de référence ou « pattern » (P1,P2) comportant un ensemble de symboles de l'alphabet précité,
- on élabore (S2) au moins une représentation (P1',P2') dudit motif de référence ou pattern en affectant à chaque symbole du motif de référence ou pattern un état valide spécifique,
- on applique (S3) sur l'article un marquage reproduisant ladite représentation du motif de référence ou pattern.

13. Procédé selon la revendication 12, dans lequel on représente chaque symbole par au moins deux éléments ayant une première représentation (E1) possible et une deuxième représentation (E2) possible.

14. Procédé selon l'une des revendications 12 ou 13, dans lequel chaque état valide comprend un groupe d'au moins un élément représenté selon la première représentation et d'au moins un élément représenté selon la deuxième représentation, chaque état valide d'un symbole étant différent d'un état valide d'un autre symbole.

15. Procédé selon la revendication 14, dans lequel chaque état invalide d'un symbole est différent des états valides de l'un quelconque des symboles.

16. Procédé selon l'une des revendications 12 à 15, dans lequel les états valides de tous les symboles sont représentés par un groupe d'éléments comprenant le même nombre d'éléments.

17. Procédé d'identification d'un motif d'identification appliqué sur un article et pouvant comporter une information relative à l'article et/ou son utilisation, **caractérisé par le fait qu'**il comprend les étapes suivantes :
- on capture (D1) une image d'une zone de l'article sur laquelle figure au moins une partie d'une représentation d'au moins un motif de référence ou « pattern » mémorisé comprenant un arrangement de plusieurs symboles appartenant à un alphabet mémorisé, chaque symbole comprenant au moins deux états valides et au moins un état invalide, chaque représentation d'un symbole dans ledit arrangement correspondant à un état valide dudit symbole, et on mémorise l'image capturée,
- on identifie (D2) les symboles de l'alphabet de symboles mémorisé en comparant l'image capturée avec l'arrangement de représentations de symboles du motif de référence ou pattern mémorisé,
- on calcule (D3) le nombre de symboles identifiés représentés dans un état valide et arrangés selon l'arrangement dudit motif de référence ou pattern mémorisé,
- on compare le résultat du calcul à un seuil de probabilité,
- et on émet un signal d'identification si le résultat atteint ledit seuil.

18. Procédé d'identification selon la revendication 17, dans lequel on définit un premier symbole dans une première position de l'arrangement du motif de référence ou pattern mémorisé ; on recherche dans l'image capturée une représentation d'au moins un état valide dudit premier symbole ; si on trouve cette représentation on considère que le symbole sélectionné est identifié, puis on définit un autre symbole dans une autre position de l'arrangement du motif de référence ou pattern mémorisé, et on réitère l'étape précédente de recherche pour cet autre symbole dans cette autre position et ainsi de suite jusqu'à l'identification ou non de tous les symboles du motif de référence ou pattern mémorisé.

19. Procédé d'identification selon la revendication 18, comprenant une étape de déchiffrement d'au moins une information numérique représentée par au moins un état valide d'au moins un symbole du motif d'identification comprenant une identification de ladite information numérique à partir d'au moins un état valide d'au moins un symbole identifié.

## Patentansprüche

1. Zweidimensionales Identifikationsmuster (P1', P1", P2', P2"), das eine spezifische zweidimensionale Anordnung von Symbolen (A, B, C, D) enthält,
wobei die verschiedenen Symbole zu einem vorbestimmten Alphabet von Symbolen (AT1, AT2) gehören,
**dadurch gekennzeichnet, dass**
jedes Symbol des Alphabets eine Vielzahl von möglichen Zuständen enthält, von denen mindestens zwei gültige Zustände (Vi1, Vi2) sind, die zur Darstellung der Symbole im Identifikationsmuster verwendbar sind, und mindestens einer ein ungültiger Zustand (Ii1, Ii2) ist, der nicht zur Darstellung der Symbole im Identifikationsmuster verwendbar ist,
wobei jedes Symbol im Identifikationsmuster gemäß einem der zwei gültigen Zustände erscheint,
wobei die zweidimensionale spezifische Anordnung von Symbolen einer vorbestimmten Anordnung der Symbole oder Bezugsmuster (P1, P2) entspricht.

2. Muster nach Anspruch 1, wobei jeder gültige Zustand mindestens zwei Elemente enthält, die eine erste mögliche Darstellung (E1) und eine zweite mögliche Darstellung (E2) haben, die sich von der ersten Darstellung unterscheidet.

3. Muster nach Anspruch 1 oder 2, wobei jeder Zustand der Symbole des Alphabets eine Gruppe von Elementen (G1, G2) enthält, wobei jede der Gruppen von Elementen mindestens zwei Elemente enthält, wobei jedes Element eine mögliche Darstellung unter einer Menge von Darstellungen hat, die eine erste Darstellung (E1) und eine zweite Darstellung (E2) enthält, die sich von der ersten Darstellung unterscheidet, und wobei jedes Symbol einen ersten gültigen Zustand, der eine erste Gruppe (G1) von mindestens einem gemäß der ersten Darstellung (E1) dargestellten Element und von mindestens einem gemäß der zweiten Darstellung (E2) dargestellten Element enthält, und einen zweiten gültigen Zustand enthält, der eine zweite Gruppe (G2) von mindestens einem gemäß der zweiten Darstellung (E2) dargestellten Element und von mindestens einem gemäß der ersten Darstellung (E1) dargestellten Element enthält.

4. Muster nach Anspruch 3, wobei jede der Gruppen (G1, G2) von Elementen mehr als zwei Elemente enthält, und wobei jedes Symbol einen ersten gültigen Zustand, der eine erste Gruppe (G1) enthält, die von mehreren gemäß der ersten Darstellung (E1) dargestellten Elementen und von mehreren gemäß der zweiten Darstellung (E2) dargestellten Elementen gebildet wird, und einen zweiten gültigen Zustand enthält, der eine zweite Gruppe (G2) von mehreren gemäß der zweiten Darstellung (E2) dargestellten Elementen und von mehreren gemäß der ersten Darstellung (E1) dargestellten Elementen enthält.

5. Muster nach einem der Ansprüche 3 oder 4, wobei die Gruppen (G1, G2) von Elementen die gleiche Anzahl von Elementen enthalten, die gemäß einer der Darstellungen (E1) dargestellt sind.

6. Muster nach einem der Ansprüche 1 bis 5, wobei mindestens ein gültiger Zustand mindestens eines Symbols des Musters eine digitale Information darstellt.

7. Muster nach Anspruch 6, wobei die gültigen Zustände jedes Symbols jeweils Binärwerte einer digitalen Information darstellen.

8. Artikel, der mindestens ein Muster nach einem der Ansprüche 1 bis 7 enthält.

9. Artikel nach Anspruch 8, der mehrere Muster enthält, die alle gleich oder alle unterschiedlich sind.

10. Artikel nach Anspruch 8, der mehrere gleiche Muster und mehrere unterschiedliche Muster enthält.

11. Artikel nach einem der Ansprüche 8 bis 10, wobei der Artikel ausgewählt wird unter einer Dose, einer Folie, einer Patrone, einer ein Nahrungsmittel enthaltenden Kapsel, einem Flaschenstöpsel, einer Banknote, einem Reisepass, einem Sicherheitsdokument, einem Etikett, einer Karte, einem Gutschein, einer pharmazeutischen Pille, einer Uhr, einer Verpackung, einem Halbleiter oder einem Computer-Peripheriegerät.

12. Verfahren zum Markieren eines Artikels mit einem Identifikationsmuster, das eine Information bezüglich des Artikels und/oder seiner Verwendung aufweisen kann, das einen Schritt enthält, in dem ein Alphabet (AT1, AT2) definiert wird, das aus mehreren Symbolen besteht, und **dadurch gekennzeichnet, dass** dieses Verfahren auch die folgenden Schritte enthält:
- für jedes Symbol werden mindestens zwei gültige Zustände und mindestens ein ungültiger Zustand definiert,
- es wird ein Bezugsmuster oder « Pattern » (P1, P2) erarbeitet (S1), das eine Menge von Symbolen des oben erwähnten Alphabets aufweist,
- es wird mindestens eine Darstellung (P1', P2') des Bezugsmusters oder Patterns erarbeitet (S2), indem jedem Symbol des Bezugsmusters oder Patterns ein spezifischer gültiger Zustand zugewiesen wird,
- es wird eine Markierung auf den Artikel aufgebracht (S3), die die Darstellung des Bezugsmusters oder Patterns wiedergibt.

13. Verfahren nach Anspruch 12, wobei jedes Symbol durch mindestens zwei Elemente dargestellt wird, die eine erste mögliche Darstellung (E1) und eine zweite mögliche Darstellung (E2) haben.

14. Verfahren nach einem der Ansprüche 12 oder 13, wobei jeder gültige Zustand eine Gruppe von mindestens einem gemäß der ersten Darstellung dargestellten Element und von mindestens einem gemäß der zweiten Darstellung dargestellten Element enthält, wobei jeder gültige Zustand eines Symbols sich von einem gültigen Zustand eines anderen Symbols unterscheidet.

15. Verfahren nach Anspruch 14, wobei jeder ungültige Zustand eines Symbols sich von den gültigen Zuständen eines beliebigen der Symbole unterscheidet.

16. Verfahren nach einem der Ansprüche 12 bis 15, wobei die gültigen Zustände aller Symbole von einer Gruppe von Elementen dargestellt werden, die die gleiche Anzahl von Elementen enthält.

17. Verfahren zur Identifikation eines Identifikationsmusters, das auf einen Artikel aufgebracht wird und eine Information bezüglich des Artikels und/oder seiner Verwendung aufweisen kann, **dadurch gekennzeichnet, dass** es die folgenden Schritte enthält:
- es wird ein Bild eines Bereichs des Artikels erfasst (D1), in dem mindestens ein Teil einer Darstellung mindestens eines gespeicherten Bezugsmusters oder « Patterns » zu sehen ist, der eine Anordnung mehrerer Symbole enthält, die zu einem gespeicherten Alphabet gehören, wobei jedes Symbol mindestens zwei gültige Zustände und mindestens einen ungültigen Zustand enthält, wobei jede Darstellung eines Symbols in der Anordnung einem gültigen Zustand des Symbols entspricht, und das erfasste Bild wird gespeichert,
- die Symbole des gespeicherten Alphabets von Symbolen werden identifiziert (D2), indem das erfasste Bild mit der Anordnung von Darstellungen von Symbolen des gespeicherten Bezugsmusters oder Patterns verglichen wird,
- die Anzahl von identifizierten Symbolen, die in einem gültigen Zustand dargestellt und gemäß der Anordnung des gespeicherten Bezugsmusters oder Patterns angeordnet sind, wird berechnet (D3),
- das Ergebnis der Berechnung wird mit einer Wahrscheinlichkeitsschwelle verglichen,
- und es wird ein Identifikationssignal gesendet, wenn das Ergebnis die Schwelle erreicht.

18. Identifikationsverfahren nach Anspruch 17, wobei ein erstes Symbol in einer ersten Position der Anordnung des gespeicherten Bezugsmusters oder Patterns definiert wird; im erfassten Bild wird eine Darstellung mindestens eines gültigen Zustands des ersten Symbols gesucht; wenn diese Darstellung gefunden wird, wird angenommen, dass das ausgewählte Symbol identifiziert ist, dann wird ein anderes Symbol in einer anderen Position der Anordnung des gespeicherten Bezugsmusters oder Patterns definiert, und der vorhergehende Suchschritt wird für dieses andere Symbol in dieser anderen Stellung wiederholt, usw., bis zur Identifikation oder nicht aller Symbole des gespeicherten Bezugsmusters oder Patterns.

19. Identifikationsverfahren nach Anspruch 18, das einen Schritt der Entschlüsselung mindestens einer digitalen Information enthält, die durch mindestens einen gültigen Zustand mindestens eines Symbols des Identifikationsmusters dargestellt wird, der eine Identifikation der digitalen Information ausgehend von mindestens einem gültigen Zustand mindestens eines identifizierten Symbols enthält.

## Claims

1. Two-dimensional identifying pattern (P1', P1", P2', P2"), comprising a specific two-dimensional arrangement of symbols (A, B, C, D),
the various symbols belonging to a preset alphabet of symbols(AT1, AT2),
**characterized in that** each symbol of the alphabet comprises a plurality of possible states, at least two of which are valid states (Vi1, Vi2), usable for the representation of the symbols in said identifying pattern, and at least one is an invalid state (Ii1, Ii2) not usable for the representation of symbols in said identifying pattern,
each symbol appears in said identifying pattern according to one of the two valid states,
said specific two-dimensional arrangement of symbols corresponding to a preset arrangement of said symbols or reference pattern (P1, P2).

2. Pattern according to Claim 1, wherein each valid state comprises at least two elements having a first possible representation (E1) and a second possible representation (E2) different from the first representation.

3. Pattern according to Claim 1 or 2, wherein each state of the alphabet symbols comprises a group of elements (G1, G2), each of said groups of elements comprising at least two elements, each element having one possible representation from among a set of representations comprising a first representation (E1) and a second representation (E2) different from the first representation, and wherein each symbol comprises a first valid state comprising a first group (G1) of at least one element represented according to the first representation (E1) and of at least one element represented according to the second representation (E2), and a second valid state comprising a second group (G2) of at least one element represented according to the second representation (E2) and of at least one element represented according to the first representation (E1).

4. Pattern according to Claim 3, wherein each of said groups (G1, G2) of elements comprises more than two elements and wherein each symbol comprises a first valid state comprising a first group (G1) formed of several elements represented according to the first representation (E1) and of several elements represented according to the second representation (E2), and a second valid state comprising a second group (G2) of several elements represented according to the second representation (E2) and of several elements represented according to the first representation (E1).

5. Pattern according to either of Claims 3 and 4, wherein said groups (G1, G2) of elements comprise the same number of elements represented according to one of the representations (E1).

6. Pattern according to one of Claims 1 to 5, wherein at least one valid state of at least one symbol of said pattern represents an item of digital information.

7. Pattern according to Claim 6, wherein the valid states of each symbol represent respectively binary values of an item of digital information.

8. Article comprising at least one pattern according to one of Claims 1 to 7.

9. Article according to Claim 8, comprising several patterns that are all identical or all different.

10. Article according to Claim 8, comprising several identical patterns and several different patterns.

11. Article according to one of Claims 8 to 10, which is chosen from a can, a foil, a cartridge, a capsule containing a comestible substance, a bottle stopper, a banknote, a passport, a security document, a label, a card, a voucher, a pharmaceutical pill, a watch, a package, a semiconductor or a computer peripheral.

12. Method for the marking of an article with an identifying pattern that may contain an item of information relating to the article and/or its use, comprising a step in which
- an alphabet (AT1, AT2) consisting of several symbols is defined;
**characterized in that** the method also comprises the following steps:
- for each symbol, at least two valid states and at least one invalid state are defined;
- a reference pattern (P1, P2) comprising a set of symbols of the aforementioned alphabet is generated (S1);
- at least one representation (P1', P2') of said reference pattern is generated (S2) by assigning a specific valid state to each symbol of the reference pattern; and
- a marking reproducing said representation of the reference pattern is applied (S3) to the article.

13. Method according to Claim 12, wherein each symbol is represented by at least two elements having a first possible representation (E1) and a second possible representation (E2).

14. Method according to either of Claims 12 and 13, wherein each valid state comprises a group of at least one element represented according to the first representation and of at least one element represented according to the second representation, each valid state of one symbol being different from a valid state of another symbol.

15. Method according to Claim 14, wherein each invalid state of a symbol is different from the valid states of any one of the symbols.

16. Method according to one of Claims 12 to 15, wherein the valid states of all the symbols are represented by a group of elements comprising the same number of elements.

17. Method for the identification of an identifying pattern applied on an article and possibly containing an item of information relating to the article and/or its use, **characterized in that** it comprises the following steps:
- an image of an area of the article, on which at least part of a representation of at least one stored reference pattern appears, is captured (D1), said pattern comprising an arrangement of several symbols belonging to a stored alphabet, each symbol comprising at least two valid states and at least one invalid state and each representation of a symbol in said arrangement corresponding to a valid state of said symbol, and the captured image is stored;
- the symbols of the stored symbol alphabet are identified (D2) by comparing the captured image with the arrangement of representations of symbols of the stored reference pattern;
- the number of identified symbols, represented in a valid state and arranged according to the arrangement of said stored reference pattern, is calculated (D3);
- the result of the calculation is compared with a probability threshold; and
- an identification signal is transmitted if the result reaches said threshold.

18. Identification method according to Claim 17, wherein a first symbol in a first position of the arrangement of the stored reference pattern is defined; a representation of at least one valid state of said first symbol is sought in the captured image; if this representation is found, it is considered that the selected symbol is identified; another symbol in another position of the arrangement of the stored reference pattern is then defined; and the previous searching step is repeated for this other symbol in this other position, and so on until all the symbols of the stored reference pattern have been identified or not.

19. Identification method according to Claim 18, which includes a step of deciphering at least one item of digital information represented by at least one valid state of at least one symbol of the identifying pattern, which comprises identifying said item of digital information from at least one valid state of at least one identified symbol.
